# EUROPÄISCHE PATENTANMELDUNG

(11) **EP 3 518 186 A1**
(43) Veröffentlichungstag der Anmeldung: **31.07.2019**
(21) Anmeldenummer: 18154171.5
(22) Anmeldetag: 30.01.2018
(51) Int. Cl.: G07C 9/00, H04B 5/00

(54) **ADAPTER UND KOMMUNIKATIONSSYSTEM**

(71) Anmelder: EUCHNER GmbH + Co. KG, 70771 Leinfelden-Echterdingen (DE)
(72) Erfinder: Madera, Dieter, 72631 Aichtal (DE); Raiser, Thomas, 71139 Ehningen (DE)
(74) Vertreter: Ruckh, Rainer Gerhard

(57) **Zusammenfassung**

Die Erfindung betrifft einen Adapter (2) mit einer Prozessoreinheit, mit einer bidirektionalen Datenschnittstelle, die zum Anschluss an eine induktive Schreib-/Leseeinheit (3) ausgebildet ist, und mit einer bidirektionalen Schnittstelle, die zum Anschluss an eine Rechnereinheit (4) ausgebildet ist.

## Beschreibung

Die Erfindung betrifft einen Adapter und ein Kommunikationssystem.

Derartige Kommunikationssysteme können insbesondere als Identifikationssysteme beziehungsweise Zugriffskontrollsysteme ausgebildet sein, mittels derer ein kontrollierter Zugang zu Steuereinrichtungen von Maschinen oder Anlagen gewährt wird oder ein kontrollierter Zugriff auf Daten oder Software wie Steuerungsbereiche von Steuerungen ermöglicht wird.

Diese Kommunikationssysteme sind als elektronische Schlüsselsysteme ausgebildet, die einerseits eine Schreib-/Leseeinheit und andererseits einen oder bevorzugt mehrere Schlüssel aufweisen. Die Schreib-/Leseeinheit und die zugeordneten Schlüssel bilden ein RFID-System. Dabei ist in jedem Schlüssel ein Transponder integriert. Wenn ein Schlüssel in eine Schlüsselaufnahme der Schreib-/Leseeinheit eingeführt ist, werden Daten im Transponder von der Schreib-/Leseeinheit eingelesen. Die Daten enthalten insbesondere benutzerspezifische Zugriffsrechte, die in der Schreib-/Leseeinheit ausgewertet und/oder verwaltet werden.

Ein derartiges elektronisches Schlüsselsystem stellt eine Alternative zu passwortbasierten Techniken dar und ermöglicht eine Zugangskontrolle für Steuereinrichtungen von Maschinen und Anlagen. Durch Speichern benutzerspezifischer Daten in den Transpondern der einzelnen Schlüssel können gezielt Benutzerprofile wie auch individuelle Berechtigungen vorgegeben werden. Durch die individuellen Berechtigungen wird den Benutzern der Schlüssel selektiv nur Zugang zu bestimmten Funktionen der Maschine oder Anlage gewährt.

Der Erfindung liegt die Aufgabe zugrunde, einen Adapter und ein Kommunikationssystem mit hoher Funktionalität bereitzustellen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft einen Adapter mit einer Prozessoreinheit, mit einer bidirektionalen Datenschnittstelle, die zum Anschluss an eine induktive Schreib-/ Leseeinheit (3) ausgebildet ist, und mit einer bidirektionalen Schnittstelle, die zum Anschluss an eine Rechnereinheit (4) ausgebildet ist.

Der erfindungsgemäße Adapter bildet eine kompakte, tragbare Baueinheit, die bequem von einem Benutzer mitgeführt werden kann.

Der erfindungsgemäße Adapter weist als erste Schnittstelle eine induktive bidirektionale Datenschnittstelle auf. Über diese induktive bidirektionale Datenschnittstelle werden berührungslos Daten mit einer externen Einheit ausgetauscht, das heißt die Schnittstelle benötigt keine verschleißanfälligen mechanischen und/oder elektrischen Anschlussmittel. Für eine zuverlässige Datenübertragung über die induktive bidirektionale Datenschnittstelle ist es lediglich erforderlich, dass der Adapter in einem hinreichend geringen Abstand zur externen Einheit platziert ist.

Besonders vorteilhaft ist die induktive bidirektionale Datenschnittstelle ein Bestandteil eines RFID-Systems.

In diesem Fall weist die induktive bidirektionale Datenschnittstelle eine mit der Prozessoreinheit verbundene Antenne auf.

Die Antenne ist mit der Prozessoreinheit des Adapters verbunden. Während die Antenne den Analogteil der induktiven bidirektionalen Datenschnittstelle bildet, bildet die Prozessoreinheit mit der Ansteuerung der Antenne den digitalen Teil der induktiven bidirektionalen Datenschnittstelle und übernimmt die Kodierung von über die Antenne auszusendenden Daten beziehungsweise die Dekodierung von über die Antenne empfangenen Daten.

Die Prozessoreinheit, die bevorzugt von einem einfachen Mikroprozessorsystem gebildet ist, übernimmt gleichzeitig die Steuerung der Rechnerschnittstelle. Der so ausgebildete Adapter weist damit einen sehr einfachen, kompakten Aufbau auf. Da der Adapter nur wenig Bauteile aufweist, kann dieser in kleinen, kompakten Bauformen gefertigt werden.

Besonders vorteilhaft ist die externe Einheit, an welche die induktive bidirektionale Datenschnittstelle des Adapters angeschlossen werden kann, als Schreib-/ Leseeinheit ausgebildet, die eine weitere Komponente des RFID-Systems bildet.

Zwischen der Schreib-/Leseeinheit und dem Adapter werden kodierte Signale im Radiofrequenzbereich übertragen. Die Schreib-/Leseeinheit generiert hierzu ein magnetisches Wechselfeld, das in die Antenne der induktiven bidirektionalen Datenschnittstelle des Adapters eingekoppelt wird.

Um eine einwandfreie Datenübertragung über die induktive bidirektionale Datenschnittstelle zu gewährleisten, sind mechanische Mittel vorgesehen, mittels derer der Adapter mit der induktiven bidirektionalen Datenschnittstelle in einem definierten Abstand zur Schreib-/Leseeinheit platziert und gehalten ist, bei welchem eine einwandfreie Datenübertragung zwischen Adapter und Schreib-/Leseeinheit gewährleistet ist.

Hierzu weist bevorzugt der Adapter ein Kopfteil auf, in welchem die Antenne integriert ist. Die Geometrie des Kopfteils ist an eine Aufnahme der Schreib-/ Leseeinheit angepasst.

Damit muss von einem Benutzer lediglich das Kopfteil des Adapters in die Aufnahme eingeführt werden. Das Kopfteil ist dann in der Aufnahme so gelagert, dass sich die Antenne zu einer Erkennungseinrichtung der Schreib-/Leseeinheit, die insbesondere eine Spule aufweist, in einem definierten Abstand befindet, der eine sichere Datenübertragung gewährleistet. Diese Verbindung zwischen Adapter und Schreib-/Leseeinheit kann auf einfache Weise hergestellt und bei Bedarf wieder gelöst werden.

Ein wesentlicher Vorteil besteht darin, dass auch dann, wenn die Schreib-/ Leseeinheit in eine Umhausung oder dergleichen fest eingebaut ist, allein durch Platzieren des Kopfteils des Adapters in deren Aufnahme die Verbindung zwischen Adapter und Schreib-/Leseeinheit ohne Hilfsmittel einfach hergestellt werden kann. Da somit keine zusätzlichen Schnittstellen an der Schreib-/Leseeinheit benötigt werden, die von der Umhausung versperrt sind und die Aufnahme der Schreib-/Leseeinheit auch bei Einbau in eine Umhausung stets freiliegt, ist stets ein ungehinderter Zugang zur Schreib-/Leseeinheit gewährleistet.

Mit der Rechnerschnittstelle des Adapters wird weiterhin ein Anschluss an eine externe Rechnereinheit ermöglicht. Die Rechnerschnittstelle kann insbesondere als leitungsgebundene Schnittstelle, insbesondere in Form einer Anschlussleitung mit einer USB-Schnittstelle oder in Form einer Buchse ausgebildet sein. Alternativ kann eine berührungslos arbeitende Schnittstelle, beispielsweise in Form einer WLAN- oder Bluetooth-Schnittstelle vorgesehen sein.

Durch den Adapter ist die Rechnereinheit räumlich entkoppelt, so dass die Rechnereinheit auch bei beengten festen Einbaulagen der Schreib-/Leseeinheit ohne Probleme mit dieser verbunden werden kann.

Der Adapter und auch die Aufnahme der Schreib-/Leseeinheit können unterschiedliche Geometrien aufweisen, so dass der Adapter in die Aufnahme einführbar, einlegbar oder generell in dieser platzierbar ist.

Das erfindungsgemäße Kommunikationssystem umfasst einen Adapter, eine Schreib-/Leseeinheit und eine Rechnereinheit. Der Adapter weist eine Prozessoreinheit, eine induktive bidirektionale Datenschnittstelle zum Datenaustausch mit der Schreib-/Leseeinheit und eine bidirektionale Schnittstelle zum Datenaustausch mit der Rechnereinheit auf.

Bei dem erfindungsgemäßen Kommunikationssystem kann mittels des erfindungsgemäßen Adapters auf einfache Weise eine bidirektionale Datenübertragung zwischen einer Schreib-/Leseeinheit und einer Rechnereinheit aufgebaut werden.

Gemäß einer vorteilhaften Ausgestaltung ist die Schreib-/Leseeinheit Bestandteil eines elektronischen Schlüsselsystems. Die Schreib-/Leseeinheit weist eine Aufnahme auf, welche zur Aufnahme von Schlüsseln und zur Aufnahme des Adapters ausgebildet ist.

Dabei bildet das elektronische Schlüsselsystem ein Identifikationssystem und/ oder ein Zugriffskontrollsystem und/oder ein Zugangskontrollsystem.

Mit dem so ausgebildeten elektronischen Schlüsselsystem kann der Zugang zu externen Einheiten, insbesondere zu Steuereinheiten von Maschinen oder Anlagen kontrolliert werden. Dabei handelt es sich insbesondere um sicherheitstechnische Anwendungen, so dass dementsprechend auch die Zugangskontrolle Sicherheitsanforderungen genügen muss.

Dies erfolgt dadurch, dass den einzelnen Schlüsseln elektronische Signaturen und benutzerspezifische Zugriffs- und/oder Zugangsberechtigungen vergeben werden, die von der Schreib-/Leseeinheit kontrolliert und verwaltet werden.

Vorteilhaft weist jeder Schlüssel einen Transponder auf, in welchem die relevanten Daten betreffend die Zugangsberechtigungen hinterlegt sind.

Generell umfasst der Begriff Zugriffskontrollsystem auch ein System, mittels dessen ein Zugriff auf gespeicherte Daten oder Softwaremodule wie Softwarebereichen vor Steuerungen, kontrolliert wird.

Die Schreib-/Leseeinheit kann sowohl die Daten der Transponder der einzelnen Schlüssel lesen als auch bidirektional mit der induktiven bidirektionalen Datenschnittstelle Daten austauschen. Dabei kann dieselbe Aufnahme der Schreib-/ Leseeinheit sowohl einen Schlüssel als auch den Adapter aufnehmen.

Damit kann das elektronische Schlüsselsystem mit der Schreib-/Leseeinheit und den zugeordneten Schlüsseln um den Adapter erweitert werden, ohne dass hierfür der Aufbau der Schreib-/Leseeinheit geändert werden muss.

Die Funktionalität des so ausgebildeten Kommunikationssystems kann dahingehend noch erweitert werden, dass der Adapter die Funktion eines Schlüssels aufweist.

Durch die Einbindung der Schreib-/Leseeinheit in das erfindungsgemäße Kommunikationssystem kann generell deren Funktionalität selbst erweitert werden, insbesondere derart, dass Daten der Schreib-/Leseeinheit in der Rechnereinheit extern ausgewertet werden können, wobei hierzu in der Rechnereinheit geeignete Mittel, insbesondere in Form von Softwaremodulen integriert sind.

Besonders vorteilhaft weist die Schreib-/Leseeinheit eine Speichereinheit auf, in welcher Daten zeitaufgelöst gespeichert sind.

Die zeitaufgelöste Speicherung erfolgt dadurch, dass die gespeicherten Daten mit Zeitstempeln versehen sind.

Hierzu kann gemäß einer ersten Variante der Adapter genutzt werden, um vor Vergabe der Zeitstempel die Signale eines Zeitgebers über die induktive bidirektionale Datenschnittstelle in die Schreib-/Leseeinheit einzulesen. Der Zeitgeber kann dabei in der Rechnereinheit oder in der Prozessoreinheit des Adapters selbst integriert sein.

Gemäß einer zweiten Variante weist die Schreib-/Leseeinheit selbst einen die Zeitstempel generierenden Zeitgeber auf. Damit dieser auch bei einer Abschaltung der externen Betriebsspannung funktionsfähig bleibt, weist die Schreib-/ Leseeinheit bevorzugt eine autarke Energieversorgung, beispielsweise in Form einer Batterie oder eines Kondensators auf.

Bei den zeitaufgelösten Daten kann es sich um Analysedaten, Gerätestatusdaten oder auch Daten, die den einzelnen Schlüsseln zugeordnet sind, handeln.

Über den Adapter können nicht nur die zeitaufgelösten Daten in die Rechnereinheit zur Auswertung und Darstellung übertragen werden.

Vielmehr ist auch eine Parametrierung der Schreib-/Leseeinheit über die Rechnereinheit möglich. Beispiele für eine Parametrierung sind die Einstellung des Zeitgebers oder die Vorgabe einer Liste mit Schlüsseln, die in der Schreib-/Leseeinheit gesperrt werden, so dass für diese eine Ausgabe von Daten verwehrt wird. Weitere Beispiele für eine Parametrierung sind die Erweiterung oder Änderung von ausführbaren Codes in der Schreib-/Leseeinheit, die Hinterlegung von Listen mit Schlüsselattributen, wie zum Beispiel gesperrte Schlüssel, zugelassene Schlüssel oder Ablaufdaten für zugelassene Schüssel.

Die Erfindung wird im Folgenden anhand der Zeichnungen erläutert. Es zeigen:
- Figur 1:: Schematische Darstellung eines Ausführungsbeispiels des erfindungsgemäßen Kommunikationssystems.
- Figur 2:: Einzeldarstellung eines Adapters des Kommunikationssystems gemäß Figur 1.
- Figur 3:: Darstellung eines Schlüssels für die Schreib-/Leseeinheit des Kommunikationssystems gemäß Figur 1.

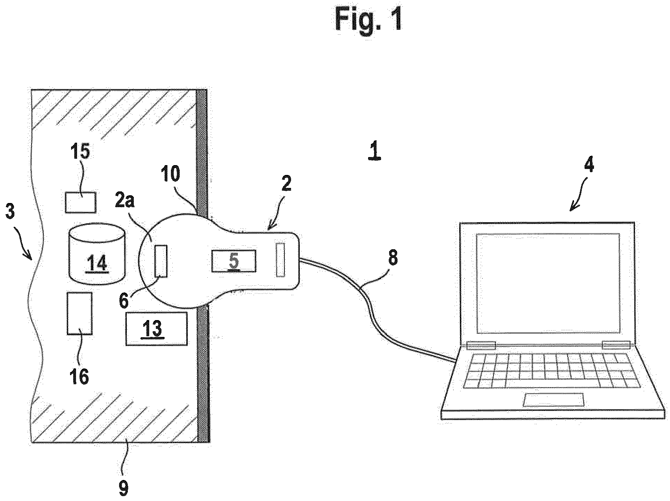

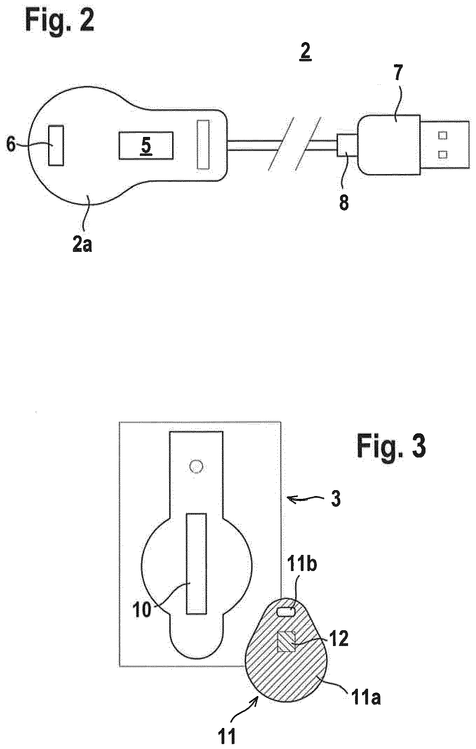

Figur 1 zeigt schematisch ein Ausführungsbeispiel des erfindungsgemäßen Kommunikationssystems 1. Das Kommunikationssystem 1 weist als zentrale Komponente einen Adapter 2 auf, der eine Schreib-/Leseeinheit 3 und eine Rechnereinheit 4 verbindet, so dass zwischen diesen ein bidirektionaler Datenaustausch möglich ist. Der Adapter 2 ist in Figur 2 in einer Einzeldarstellung dargestellt.

Im Adapter 2 ist eine Prozessoreinheit in Form eines Mikroprozessors 5 integriert. Der Mikroprozessor 5 steuert einerseits eine Rechnerschnittstelle und andererseits eine induktive bidirektionale Datenschnittstelle, welche im Adapter 2 integriert sind. Die induktive bidirektionale Datenschnittstelle umfasst eine Antenne 6. Die Rechnerschnittstelle weist im vorliegenden Fall eine USB-Schnittstelle 7 an einer Anschlussleitung 8 auf. Alternativ kann anstelle der Anschlussleitung 8 auch eine Buchse vorgesehen sein. Generell ist auch eine WLAN- oder Bluetooth-Schnittstelle oder dergleichen möglich.

Die Rechnereinheit 4 ist von einem PC, Laptop oder dergleichen gebildet.

Die Schreib-/Leseeinheit 3 bildet ein Identifikationssystem beziehungsweise Zugriffskontrollsystem, mittels dessen der Zugang zu einer nicht dargestellten Steuereinrichtung einer Maschine oder Anlage erfolgt. Die Schreib-/Leseeinheit 3 wird insbesondere im Bereich der Sicherheitstechnik eingesetzt. Dementsprechend erfüllt die mit der Schreib-/Leseeinheit 3 durchgeführte Zugangskontrolle die geltenden Sicherheitsanforderungen.

Die Schreib-/Leseeinheit 3 ist, wie Figur 1 zeigt, fest in einer Umhausung 9 der Anlage, Maschine oder dergleichen so eingebaut, dass nur deren Frontseite freiliegt, an welcher eine Aufnahme in Form eines Einführschlitzes 10 ausmündet (Figur 3).

Die Schreib-/Leseeinheit 3 bildet im vorliegenden Fall ein elektronisches Schlüsselsystem aus, das heißt der Schreib-/Leseeinheit 3 ist eine Anzahl von elektronischen Schlüsseln zugeordnet, wobei einer der Schlüssel 11 in Figur 3 dargestellt ist.

Jeder Schlüssel 11 weist einen Grundkörper 11 a mit einem daran anschließenden Griffstück 11b auf Im Grundkörper 11a ist ein Transponder 12 integriert.

Im Transponder 12 sind benutzerspezifische Daten wie zum Beispiel definierte Zugriffsrechte zur Steuereinrichtung oder elektronische Signaturen gespeichert.

Ein Benutzer, der einen Schlüssel 11 mit sich trägt, kann diesen Schlüssel 11 mit seinem Grundkörper 11a in den Einführschlitz 10 der Schreib-/Leseeinheit 3 stecken. Dort ist der Grundkörper 11a definiert so gelagert, dass der Transponder 12 im Einflussbereich einer in der Schreib-/Leseeinheit 3 integrierten Erkennungseinrichtungen 13 ist, welche eine Spule oder dergleichen aufweist. Mit der Erkennungseinrichtung 13 werden die Daten aus dem Transponder 12 ausgelesen. Die Erkennungseinrichtungen 13 mit den Transpondern 12 bilden ein RFID-System. In Abhängigkeit der ausgelesenen Zugriffsrechte gewährt dann die Schreib-/Leseeinheit 3 Zugang zu bestimmten Funktionen der Steuereinrichtung. Generell erfolgt in der Schreib-/Leseeinheit 3 auch eine Zugriffsverwaltung für alle Schlüssel 11 des Schlüsselsystems.

Wie insbesondere aus Figur 2 ersichtlich, weist der Adapter 2 ein Kopfteil 2a auf, welches dieselbe Form wie der kreisscheibenförmige Grundkörper 11a eines Schlüssels 11 aufweist. In diesem Kopfteil 2a ist die Antenne 6 integriert. Wenn das Kopfteil 2a in den Einführschlitz 10 der Schreib-/Leseeinheit 3 eingesteckt ist, liegt die Antenne 6 im Einflussbereich der Erkennungseinrichtung 13 der Schreib-/Leseeinheit 3. Über die so gebildete induktive bidirektionale Datenschnittstelle kann ein bidirektionaler Datenaustausch zwischen der Schreib-/ Leseeinheit 3 und Adapter 2 und damit zwischen der Schreib-/Leseeinheit 3 und der Rechnereinheit 4 erfolgen. Die Antenne 6 ist Bestandteil des RFID-Systems.

Generell können die Komponenten der Schreib-/Leseeinheit 3 auch andere Geometrien aufweisen.

Durch den Adapter 2 wird das elektronische Schlüsselsystem modular erweitert, da der Adapter 2 alternativ zu den Schlüsseln 11 durch Einschieben in den Einführschlitz 10 mit der Schreib-/Leseeinheit 3 verbunden werden kann. Die Funktionalität dieses Systems kann dadurch noch erweitert werden, dass der Adapter 2 selbst die Funktion eines Schlüssels 11 aufweist.

Wie aus Figur 1 ersichtlich, ist in der Schreib-/Leseeinheit 3 eine Speichereinheit 14 integriert, die bevorzugt Bestandteil eines Prozessors ist, der die Erkennungseinrichtung 13 steuert. Weiterhin weist die Schreib-/Leseeinheit 3 einen Zeitgeber 15 auf. Damit dieser auch bei Abschaltung der externen Betriebsspannung der Schreib-/Leseeinheit 3 funktionsfähig bleibt, ist in der Schreib-/Leseeinheit 3 eine einfache Energieversorgung in Form einer Batterie 16 integriert. Alternativ kann ein Kondensator als Energiespeicher vorgesehen sein.

In der Schreib-/Leseeinheit 3 erfolgt eine zeitaufgelöste Speicherung von Daten, insbesondere von Daten der Schlüssel 11, Analysedaten oder Gerätestatusdaten. Die Daten werden hierzu mit Zeitstempeln des Zeitgebers 15 versehen und in der Speichereinheit 14 abgespeichert. Die Generierung von Zeitstempeln mit dem in der Schreib-/Leseeinheit 3 integrierten Zeitgeber 15 ist nicht zwingend. Alternativ können Zeitstempel auch über den Adapter 2 eingelesen werden.

Die gespeicherten, zeitaufgelösten Daten können über den Adapter 2 in die Rechnereinheit 4 eingelesen werden. Dort sind Softwaremodule integriert, mit denen eine Auswertung oder auch Darstellung der Daten erfolgen kann.

Umgekehrt kann durch Einlesen von Parametrierbefehlen aus der Rechnereinheit 4 eine Parametrierung der Schreib-/Leseeinheit 3 erfolgen. Beispielsweise kann die Einstellung des Zeitgebers 15 parametriert werden. Zudem können definierte Schlüssel 11 gesperrt oder freigegeben werden, wobei für einen gesperrten Schlüssel 11 die Ausgabe von Daten verwehrt ist.

Weitere Beispiele für eine Parametrierung sind die Erweiterung oder Änderung von ausführbaren Codes in der Schreib-/Leseeinheit 3, die Hinterlegung von Listen mit Schlüsselattributen, wie zum Bespiel gesperrte Schüssel, zugelassene Schlüssel oder Ablaufdaten für zugelassene Schüssel.

### Bezugszeichenliste

- (1): Kommunikationssystem
- (2): Adapter
- (2a): Kopfteil
- (3): Schreib-/Leseeinheit
- (4): Rechnereinheit
- (5): Mikroprozessor
- (6): Antenne
- (7): USB-Schnittstelle
- (8): Anschlussleitung
- (9): Umhausung
- (10): Einführschlitz
- (11): Schlüssel
- (11a): Grundkörper
- (11b): Griffstück
- (12): Transponder
- (13): Erkennungseinrichtung
- (14): Speichereinheit
- (15): Zeitgeber
- (16): Batterie

## Patentansprüche

1. Adapter (2) mit einer Prozessoreinheit, mit einer bidirektionalen Datenschnittstelle, die zum Anschluss an eine induktive Schreib-/Leseeinheit (3) ausgebildet ist, und mit einer bidirektionalen Schnittstelle, die zum Anschluss an eine Rechnereinheit (4) ausgebildet ist.

2. Adapter (2) nach Anspruch 1, **dadurch gekennzeichnet, dass** die bidirektionale Datenschnittstelle Bestandteil eines RFID-Systems ist und für einen Datenaustausch mit der Schreib-/Leseeinheit (3) ausgebildet ist.

3. Adapter (2) nach einem der Ansprüche 1 oder 2, **dadurch gekennzeichnet, dass** die bidirektionale Datenschnittstelle eine mit der Prozessoreinheit verbundene Antenne (6) aufweist.

4. Adapter (2) nach einem der Ansprüche 1 bis 3, **dadurch gekennzeichnet, dass** dieser ein Kopfteil (2a) aufweist, in welchem die Antenne (6) integriert ist, wobei die Geometrie des Kopfteils (2a) an eine Aufnahme der Schreib-/Leseeinheit (3) angepasst ist.

5. Kommunikationssystem (1) mit einem Adapter (2), einer Schreib-/Leseeinheit (3) und einer Rechnereinheit (4), wobei der Adapter (2) eine Prozessoreinheit, eine induktive bidirektionale Datenschnittstelle zum Datenaustausch mit der Schreib-/Leseeinheit (3) und eine bidirektionale Schnittstelle zum Datenaustausch mit der Rechnereinheit (4) aufweist.

6. Kommunikationssystem (1) nach Anspruch 5, **dadurch gekennzeichnet, dass** die Schreib-/Leseeinheit (3) eine Speichereinheit (14), in welcher Daten zeitaufgelöst gespeichert sind, aufweist.

7. Kommunikationssystem (1) nach Anspruch 6, **dadurch gekennzeichnet, dass** die in der Speichereinheit (14) gespeicherten Daten mit Zeitstempeln versehen sind, wobei die Zeitstempel mittels eines Zeitgebers (15) der Schreib-/Leseeinheit (3) generiert oder über die induktive bidirektionale Datenschnittstelle des Adapters (2) eingelesen werden.

8. Kommunikationssystem (1) nach einem der Ansprüche 5 bis 7, **dadurch gekennzeichnet, dass** in der Rechnereinheit (4) Mittel zur Auswertung und Darstellung von aus der Schreib-/Leseeinheit (3) ausgelesenen Daten vorgesehen sind.

9. Kommunikationssystem (1) nach einem der Ansprüche 5 bis 8, **dadurch gekennzeichnet, dass** die Schreib-/Leseeinheit (3) durch Einlesen von Daten aus der Rechnereinheit (4) über den Adapter (2) parametrierbar ist.

10. Kommunikationssystem (1) nach Anspruch 9, **dadurch gekennzeichnet, dass** als Parametrierungen die Einstellungen von Zeitgebern (15), die Vorgabe von Listen mit Schlüsseln, die in der Schreib-/Leseeinheit (3) gesperrt sind, die Erweiterung oder Änderung von ausführbaren Codes in der Schreib-/Leseeinheit (3), die Hinterlegung von Listen mit Schlüsselattributen wie insbesondere gesperrte Schlüssel, zugelassene Schlüssel oder Ablaufdaten für zugelassene Schlüssel, vorgesehen sind.

11. Kommunikationssystem (1) nach einem der Ansprüche 5 bis 10, **dadurch gekennzeichnet, dass** die Schreib-/Leseeinheit (3) eine autarke Energieversorgung aufweist.

12. Kommunikationssystem (1) nach einem der Ansprüche 5 bis 11, **dadurch gekennzeichnet, dass** die Schreib-/Leseeinheit (3) Bestandteil eines elektronischen Schlüsselsystems ist, wobei die Schreib-/Leseeinheit (3) eine Aufnahme aufweist, welche zur Aufnahme von Schlüsseln (11) und zur Aufnahme des Adapters (2) ausgebildet ist.

13. Kommunikationssystem (1) nach Anspruch 12, **dadurch gekennzeichnet, dass** das elektronische Schlüsselsystem ein Identifikationssystem und/oder ein Zugriffskontrollsystem und/oder ein Zugangskontrollsystem bildet.

14. Kommunikationssystem (1) nach einem der Ansprüche 13 oder 14, **dadurch gekennzeichnet, dass** jeder Schlüssel (11) einen Transponder (12) aufweist.

15. Kommunikationssystem (1) nach einem der Ansprüche 12 bis 14, **dadurch gekennzeichnet, dass** der Adapter (2) die Funktion eines Schlüssels (11) aufweist.
